Europäisches Patentamt

European Patent Office

Office européen des brevets

(19)

(11) **EP 0 726 641 B1**

(12) # EUROPÄISCHE PATENTSCHRIFT

(45) Veröffentlichungstag und Bekanntmachung des Hinweises auf die Patenterteilung:
**16.12.1998 Patentblatt 1998/51**

(51) Int Cl.6: **H02M 5/27**

(21) Anmeldenummer: **96101351.3**

(22) Anmeldetag: **31.01.1996**

(54) **Verfahren zur Erzeugung zweier dreiphasiger Modulationssignale für einen pulsweitenmodulierenden Steuersatz eines Matrix-Umrichters**

Method for generating two three-pHase modulation signals for a PWM controller of a matrix converter

Procédé pour la génération de deux signaux de modulation triphasés pour le dispositif de commande à modulation de largeur d'impulsion d'un convertisseur à matrice

(84) Benannte Vertragsstaaten:
**DE FR GB IT**

(30) Priorität: **13.02.1995 DE 19504690**

(43) Veröffentlichungstag der Anmeldung:
**14.08.1996 Patentblatt 1996/33**

(73) Patentinhaber: **SIEMENS AKTIENGESELLSCHAFT**
**80333 München (DE)**

(72) Erfinder: **Heining, Hans-Dieter, Dipl.-Ing.**
**D-91126 Schwabach (DE)**

(56) Entgegenhaltungen:
**EP-A- 0 336 019          EP-A- 0 356 547**

- **IEEE INDUSTRY APPLICATIONS SOCIETY ANNUAL MEETING, PITTSBURGH, OCTOBER 2 - 7, 1988, Nr. PART 1, 1988, 2.Oktober 1988, INSTITUTE OF ELECTRICAL AND ELECTRONICS ENGINEERS, Seiten 712-721, XP000011672 AKIO ISHIGURO ET AL: "A NEW METHOD OF PWM CONTROL FOR FORCED COMMUTATED CYCLOCONVERTERS USING MICROPROCESSORS"**
- **IEEE TRANSACTIONS ON INDUSTRIAL ELECTRONICS, Bd. 38, Nr. 3, 1.Juni 1991, Seiten 166-172, XP000234789 AKIO ISHIGURO ET AL: "A NOVEL CONTROL METHOD FOR FORCED COMMUTATED CYCLOCONVERTERS USING INSTANTANEOUS VALUES OF INPUT LINE-TO-LINE VOLTAGES"**

**Beschreibung**

Die Erfindung bezieht sich auf ein Verfahren zur Erzeugung zweier dreiphasiger Modulationssignale für einen pulsweitenmodulierenden Steuersatz eines Matrix-Umrichters aus einem vorbestimmten Spannungsvektor und eine Vorrichtung zur Durchführung dieses Verfahrens. Außerdem bezieht sich die Erfindung auf ein pulsweitenmodulierendes Steuerverfahren und einen Steuersatz zur Durchführung dieses Verfahrens, wobei das Verfahren zur Erzeugung zweier dreiphasiger Modulationssignale verwendet wird.

Aus der EP 0 336 019 B1 ist ein Verfahren zur mehrstufigen Impulsbreitenmodulation und ein Modulator dazu bekannt. Dieses Impulsbreitenmodulations-verfahren verwendet zwei Modulationssignale, die mit einem Abtastsignal verglichen werden. Da zwei Modulationssignale verwendet werden, wird diese Modulation auch Zweifachmodulation genannt. Der Modulator, der diese mehrstufige Modulation durchführt, ist ausgangsseitig über Ansteuerschaltungen mit den Stromrichterventilen eines dreiphasigen Dreipunkt-Wechselrichters verbunden. Gemäß der Zweifachmodulation werden zur Bildung der Schaltimpulse für die Ventile in den Phasen des Dreipunkt-Wechselrichters zwei getrennte, phasengleiche und zueinander nullpunktverschobene Sollsignalsysteme vom Abtastsignal (Sägezahnsignal bzw. Dreieckssignal) abgetastet. Das erste und zweite Sollsignalsystem besteht jeweils aus drei sinusförmigen, um 120° elektrisch zueinander phasenverschobenen Phasensignalverläufen. Dabei sind korrespondierende Phasensignalverläufe in den beiden Sollsignalsystemen zueinander phasengleich. Die Phasenverläufe des ersten Sollsignalsystems liegen dabei in der Regel im oberen Bereich des Abtastsignals, während die Phasenverläufe des zweiten Sollsignalsystems im unteren Bereich des Abtastsignals liegen.

Der Nachteil dieser mehrstufigen Impulsbreitenmodulation besteht darin, daß ab einer Aussteuerung von A>0,5 es zunehmend zu einer Überlagerung der Phasensignalverläufe bei den Sollsignalsystemen kommt. Es tritt somit ein Modulationsfehler auf, da die "Kuppen" der bevorzugten sinusförmigen Phasensignalverläufe vom Abtastsignal nicht mehr abgetastet werden können. Die Folge davon ist eine mit der Aussteuerung zunehmende Verzerrung der elektrischen Signale am Ausgang des Dreipunkt-Wechselrichters. Diese Signale sind folglich mit einem zunehmenden ungünstigen Oberschwingungsspektrum belastet.

Aus der EP 0 356 547 B1 ist ebenfalls eine mehrstufige Impulsbreitenmodulation bekannt, wobei die elektrischen Größen am Ausgang des Umrichters über ein günstigeres Oberschwingungsspektrum verfügen. Dies wird dadurch erreicht, daß ein erstes und zweites Sollsignalsystem gemäß der Zweifachmodulation derart erzeugt werden, daß alle Signalverläufe des ersten Sollsignalsystems für die Dauer der Überschreitung der oberen Abtastgrenze um die aktuelle Größe des ersten Abstandswertes erniedrigt und gleichzeitig alle Phasensignalverläufe des zweiten Sollsignalsystems für die Dauer der Unterschreitung der unteren Abtastgrenze um die aktuelle Größe des zweiten Abstandswertes erhöht werden. Durch die Bildung dieser Sollsignalsysteme für die Modulation wird der lineare Aussteuerbereich erhöht, wodurch die Signale am Ausgang des Dreipunkt-Wechselrichters weniger von der gewünschten Sinusform abweichen und folglich ein günstigeres Oberschwingungsspektrum aufweisen.

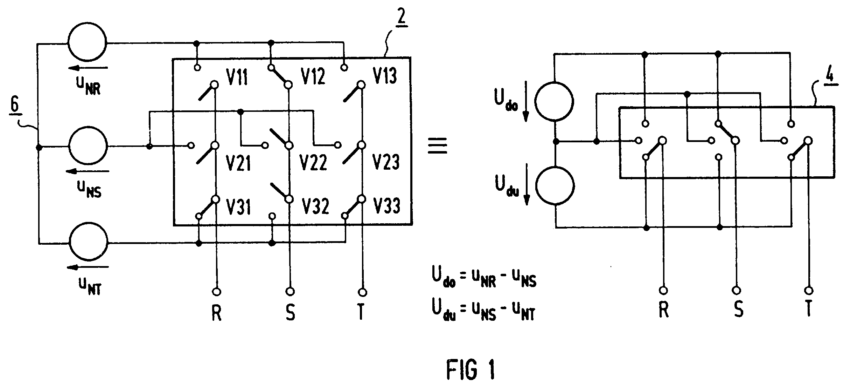

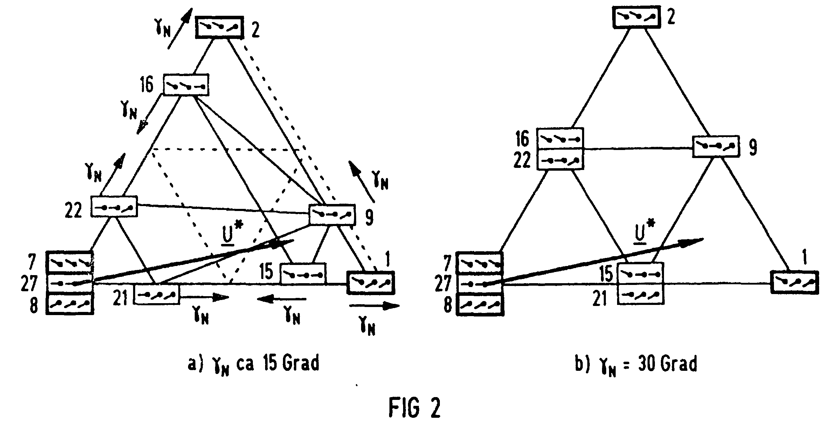

Bei der Steuerung eines dreiphasigen Matrix-Umrichters geht die Erfindung von der Erkenntnis aus, daß der Matrix-Umrichter für die Spannungsbildung auf der Ausgangs-(Motor)-Seite als Dreipunkt-Wechselrichter mit zwei Teilzwischenkreisspannungen $U_{do}$ und $U_{du}$ betrachtet werden kann (Figur 1). Je nach Netzphasenlage $\gamma_N$ ergeben sich im allgemeinen unterschiedliche Teilzwischenkreisspannungen, aus denen ein gewünschter Ausgangsspannungszeiger gemäß dem Verfahren der Raumzeigermodulation im zeitlichen Mittel eingestellt werden kann. Abhängig vom Netzwinkel $\gamma_N$ stehen dafür Spannungsvektoren bzw. Schaltzustände zur Verfügung, die im allgemeinen zwischen denen eines Zweipunkt-Wechselrichters (Sonderfall: $\gamma_N$=0°, 60°, ...,300°) und einem Dreipunkt-Wechselrichter mit symmetrischem Zwischenkreis (Sonderfall: $\gamma_N$=30°,90°,..., 330°) liegen (Figur 2).

Einschaltdauer und Auswahl geeigneter Schaltzustände lassen sich unter Berücksichtigung der zur Verfügung stehenden Spannungvektoren wie bei Zwischenkreisumrichtern auch beim Matrix-Umrichter analytisch berechnen. Dazu wird ähnlich wie beim Dreipunkt-Wechselrichter jeweils das Teildreieck ausgewählt, in dem der Sollspannungszeiger liegt. Der verbleibende Oberschwingungsgehalt ist dann minimal. Im Gegensatz zum Dreipunkt-Wechselrichter (Schaltzustände siehe Figur 2b) läßt sich beim Matrix-Umrichter der Sollspannungszeiger im allgemeinen mehreren Teildreiecken zuordnen. Dem beispielhaft in Figur 2a dargestellten Spannungsraumzeiger $\underline{U}^*$ lassen sich die Dreiecke 21-9-15, 22-9-15 und 15-16-9 zuordnen. Diese Redundanz läßt sich für eine Minimierung der Netzrückwirkungen einsetzen. Obwohl sich die Bestimmungsgleichungen für beliebige Teildreiecke durch geeignete schiefwinklige Koordinatentransformationen vereinfachen lassen, bleibt der analytische Rechenaufwand hoch und die optimale Auswahl der Schaltzustandsreihenfolgen, insbesondere für hochdynamische Anwendungen, aufwendig.

In dem Aufsatz "Space vector pulse width modulation in direct frequency converters", abgedruckt in der Konferenzpublikation "PEMC'94", Vol. I, 20 bis 22 September 1994, Seiten 468 bis 473, Warschau, Polen, wird ein Pulsweitenmodulationsverfahren für einen Matrix-Umrichter angegeben. Dieses Verfahren geht von den diskreten Schaltzuständen eines Matrix-Umrichters aus. Die Dauer der Schaltzustände der Stromrichterventile des Matrix-Umrichters wird ähnlich der vom Zweipunkt-Wechselrichter bekannten Form der "Raumzeiger-Approximation" analytisch berechnet, wobei nicht alle möglichen Schaltzustände ausgenutzt werden. Dadurch ergibt sich ein höherer Oberschwingungsgehalt als notwendig. Der Vorteil dieses Verfahrens liegt darin, daß die Gleichungen zur Berechnung der Schaltzustandsdauern und die Auswahl der Schaltzustände einfacher wird.

Der Aufwand zur analytischen Beschreibung des Matrix-Umrichters, der obige Nachteile vermeidet, wäre dagegen relativ hoch.

Der Erfindung liegt nun die Aufgabe zugrunde, ein Verfahren zur Erzeugung zweier dreiphasiger Modulationssignale für einen pulsweitenmodulierten Steuersatz eines Matrix-Umrichters und eine Vorrichtung zur Durchführung dieses Verfahrens anzugeben, wodurch die Möglichkeit besteht, ein bekanntes Verfahren für die Steuerung eines Dreipunkt-Wechselrichters so zu modifizieren, daß damit ein Matrix-Umrichter optimal betrieben werden kann.

Diese Aufgabe wird erfindungsgemäß gelost durch die Merkmale des Anspruchs 1 und 6, wobei ein modifiziertes Steuerverfahren und ein Steuersatz durch die Merkmale der Ansprüche 4 und 9 gekennzeichnet sind.

Mit Hilfe der Merkmale des Anspruchs 1 werden die dreiphasigen Modulationssignale einer Zweifachmodulation derart in Abhängigkeit eines ermittelten Netzspannungswinkels und ermittelter Netzspannungs-Istwerte korrigiert, so daß die dadurch entstehenden dreiphasigen Modulationssignale für die Steuerung eines Matrix-Umrichters geeignet sind. Diese Korrektur zweier dreiphasiger Modulationssignale einer Zweifachmodulation gilt für einen Netzleistungsfaktor von Eins.

Bei einem vorteilhaften Verfahren werden die ermittelten Korrekturfaktoren mit zusätzlichen Korrekturfaktoren für einen vorbestimmten Netzleistungsfaktor gewichtet, wobei diese zusätzlichen Korrekturfaktoren in Abhängigkeit eines vorbestimmten Stromwinkels und eines ermittelten Netzspannungswinkels berechnet werden. Somit ist innerhalb der Grenzen der verfügbaren Spannungen des Matrix-Umrichters damit auch eine Blindleistungsverstellung am Umrichtereingang unabhängig vom Ausgang möglich.

Werden die korrigierten dreiphasigen Modulationssignale für eine Zweifachmodulation zur Steuerung eines Matrix-Umrichters verwendet, so müssen die erzeugten Steuersignale in Abhängigkeit des ermittelten Netzspannungswinkels den Stromrichterventilen des Matrix-Umrichters zugeordnet werden. Dazu wird anhand des Netzwinkels ermittelt, in welchem Winkelbereich der Netzspannungszeiger liegt. Die Netzwinkelperiode wird dazu in sechs 60°-Sektoren aufgeteilt, die durch eine Sektorkennung beschrieben werden. Mit Hilfe dieser Sektorkennung wird die Zuordnung der Steuersignale zu Stromrichterventilen des Matrix-Umrichters gesteuert. Derartige Zuordnungen können in Tabellenform in einem Speicher des Steuersatzes des Matrix-Umrichters abgelegt werden.

Somit erhält man, ausgehend von einem Steuerverfahren und einem Steuersatz für einen Dreipunkt-Wechselrichter, durch Korrektur vorhandener Modulationssignale einer Zweifachmodulation und die Verwendung einer Zuordnung von generierten Steuersignalen zu Stromrichterventilen in Abhängigkeit eines Netzspannungswinkels ein Steuerverfahren und einen Steuersatz für einen Matrix-Umrichter.

Somit erhält man mit geringer Modifikation eines bekannten Steuersatzes eines Dreipunkt-Wechselrichters einen Steuersatz für einen Matrix-Umrichter, der wenig Rechenaufwand erfordert und alle Schaltzustände des Matrix-Umrichters optimal einsetzt.

Bei einem weiteren vorteilhaften pulsweitenmodulierenden Steuerverfahren wird die Abtastfrequenz des Abtastsignals in Abhängigkeit des Netzspannungswinkels verstellt. Dadurch wird die Schaltfrequenz der Stromrichterventile des Matrix-Umrichters so verstellt, daß der Stromrippel bei vorgegebener maximaler und mittlerer Schaltfrequenz möglichst gleichmäßig wird, wodurch eine Verbesserung der Ausgangs-Stromkurvenform des Matrix-Umrichters erzielt wird. Die Art der Verstellung der Abtastfrequenz ist dabei unerheblich (linear, quadratisch, Winkelfunktion).

Bei einer vorteilhaften Ausführungsform des Steuersatzes eines Matrix-Umrichters ist zur Realisierung ein Mikroprozessor vorgesehen. Dadurch kann durch Hinzufügung von Zusatzprogrammen, beispielsweise die Korrekturprogramme und eines Zusatzprogramms, ein bestehender Steuersatz eines Dreipunkt-Wechselrichters ohne großen Aufwand so modifiziert werden, daß man einen Steuersatz für einen Matrix-Umrichter erhält.

Zur weiteren Erläuterung der Erfindung wird auf die Zeichnung Bezug genommen, in der ein Ausführungsbeispiel eines Steuersatzes eines Matrix-Umrichters schematisch veranschaulicht ist.

Figur 1    veranschaulicht die Analogie zwischen einem Dreipunkt-Wechselrichter und einem Matrix-Umrichter, die

Figur 2    zeigt die Schaltzustände eines Matrix-Umrichters und eines Dreipunkt-Wechselrichters in vektorieller Form, in

Figur 3    ist ein Blockschaltbild eines Steuersatzes für einen Matrix-Umrichter dargestellt, in

Figur 4    ist ein Blockschaltbild einer ersten Ausführungsform einer Vorrichtung zur Erzeugung von zwei dreiphasigen Modulationssignalen des Steuersatzes nach Figur 3 dargestellt, wobei in

Figur 5    ein Blockschaltbild einer zweiten Ausführungsform dieser Vorrichtung des Steuersatzes nach Figur 3 dargestellt ist, die

Figur 6    zeigt in einem Diagramm über dem Netzwinkel die Zuordnung der Sektoren zu den Netzspannungen, die

Figur 7    zeigt in mehreren Diagrammen die Umrichter-Ausgänge (Ausgangsströme, eine Phasenausgangsspannung, zugehörige sinusförmige Maschinen-Gegenspannung und eine verkettete Ausgangsspannung) und jeweils ein Modulationsignal und das Abtastsignal bei einer Aussteuerung von A=0,864 und konstanter Schaltfrequenz, die

Figur 8    zeigt in mehreren Diagrammen die zugehörigen Netzgrößen (Netzspannungen und gepulste Netzströme) bei einer idealen Kommutierung, die

Figur 9    zeigt in mehreren Diagrammen die Umrichter-Ausgangsgrößen, die Modulationssignale der Zweifachmodulation und das Abtastsignal bei einer Aussteuerung von A=0,65 und konstanter Schaltfrequenz, wobei die

Figur 10   einen vergrößerten ersten Ausschnitt aus der Figur 9 zeigt und die

Figur 11   diesen Ausschnitt mit variabler Schaltfrequenz darstellt.

In Figur 1 ist einerseits das Ersatzschaltbild eines Matrix-Umrichters 2 und eines Dreipunkt-Wechselrichters 4 dargestellt. Der Dreipunkt-Wechselrichter 4 wird eingangsseitig mit zwei Teilzwischenkreisspannungen $u_{do}$ und $u_{du}$ versorgt. Der Matrix-Umrichter 2 ist eingangsseitig an einem Drehstromnetz 6 angeschlossen, das die Netzphasenspannungen $u_{NR}$, $u_{NS}$ und $u_{NT}$ liefert. Der dreiphasige Matrix-Umrichter 2 und der dreiphasige Dreipunkt-Wechselrichter 4 sind identisch aufgebaut. Die Phase R bzw. S bzw. T enthält mehrere Stromrichterventile V11, V21, V31 bzw. V12, V22, V32 bzw. V13, V23, V33, mit denen die Phase R bzw. S bzw. T mit drei Potentialen verbunden werden kann. Für die Spannungsbildung auf der Ausgangsseite kann der Matrix-Umrichter 2 als Dreipunkt-Wechselrichter 4 mit zwei fiktiven Teilzwischenkreisspannungen $U_{do}=u_{NR}-u_{NS}$ und $U_{du}=u_{NS}-u_{NT}$ betrachtet werden. Je nach Netzphasenlage $\gamma_N$ ergeben sich unterschiedliche Teilzwischenkreisspannungen $U_{do}$ und $U_{du}$, aus denen ein gewünschter Ausgangsspannungszeiger $\underline{U}^*$ gemäß dem Verfahren der Raumzeiger-approximation im zeitlichen Mittel eingestellt werden kann. Abhängig vom Netzwinkel $\gamma_N$ stehen dafür Spannungsvektoren (aktive und passive Raumzeiger) bzw. Schaltzustände zur Verfügung, die zwischen denen eines Zweipunkt-Wechselrichters und eines Dreipunkt-Wechselrichters mit symmetrischem Zwischenkreis liegen.

In der Figur 2 ist einerseits ein Sektor eines Schaltzustand-Hexagons für einen Netzwinkel $\gamma_N$=15° und andererseits ein Sektor für einen Netzwinkel $\gamma_N$=30° dargestellt. Die Darstellung für den Netzwinkel $\gamma_N$=30° (Figur 2b) entspricht einem Sektor eines Schaltzustand-Hexagons für einen Dreipunkt-Wechselrichter 4 mit symmetrischem Zwischenkreis. Dieser Sonderfall trifft ebenfalls bei den Netzwinkeln $\gamma_N$=30°,90°, ..., 330° auf. Ein weiterer Sonderfall, der identisch mit den Schaltzuständen eines Zweipunkt-Wechselrichters ist, tritt bei Netzwinkeln $\gamma_N$=0°,60°,...,300° auf. Schaltzustände für Netzwinkel $\gamma_N$, die jeweils zwischen diesen genannten Sonderfällen liegen, sind beispielhaft für den Netzwinkel $\gamma_N$=15° dargestellt (Figur 2a).

Um den Spannungsvektor $\underline{U}^*$ mittels aktiver und passiver Raumzeiger im zeitlichen Mittel approximieren zu können, wird bei der Darstellung gemäß Figur 2b (Sonderfall "Dreipunkt-Wechselrichter") nur ein Dreieck 15-9-1 ausgesucht, in dem der Spannungszeiger $\underline{U}^*$ liegt. Die Eckpunkte dieses Dreiecks werden durch die Schaltzustände 15, 9 und 1 bestimmt. Bei der Darstellung gemäß Figur 2a liegt der Spannungszeiger $\underline{U}^*$ in mehreren Dreiecken, nämlich den Dreiecken 21-9-15, 15-16-9 und 22-9-15. Welche Schaltzustände-Kombination realisiert wird, hängt beispielsweise von der Minimierung der Netzrückwirkung oder einer minimalen Schaltfrequenz ab. Obwohl sich die Bestimmungsgleichungen für beliebige Teildreiecke durch geeignete schiefwinklige Koordinatentransformationen vereinfachen lassen, bleibt der analytische Rechenaufwand hoch und die optimale Auswahl der Schaltzustandsreihenfolge, insbesondere für hochdynamische Anwendungen, aufwendig. Eine vereinfachte analytische Ausführungsform ist in der eingangs erwähnten Kongreßpublikation dargestellt.

Der Figur 2a ist auch entnehmbar, wohin die aktiven Schaltzustände dieses Sektors wandern, wenn der Netzwinkel $\gamma_N$=15° nach $\gamma_N$=30° dreht. Die Bewegungen der aktiven Schaltzustände 21,15,22,16,2,9 und 1 dieses dargestellten Sektors sind jeweils durch Pfeile $\gamma_N$ und die Endlagen bei den Netzwinkeln $\gamma$ N=30° sind durch unterbrochene Linien dargestellt.

Wie diesem sich ständig veränderlichen Hexagon zu entnehmen ist, müssen bei einem analytischen Verfahren zunächst die fiktiven Schaltzwischenkreisspannungen $U_{do}$ und $U_{du}$ ermittelt werden, damit die mehreren Teildreiecke, in denen ein vorbestimmter Sollspannungszeiger $\underline{U}^*$ liegt, festliegen.

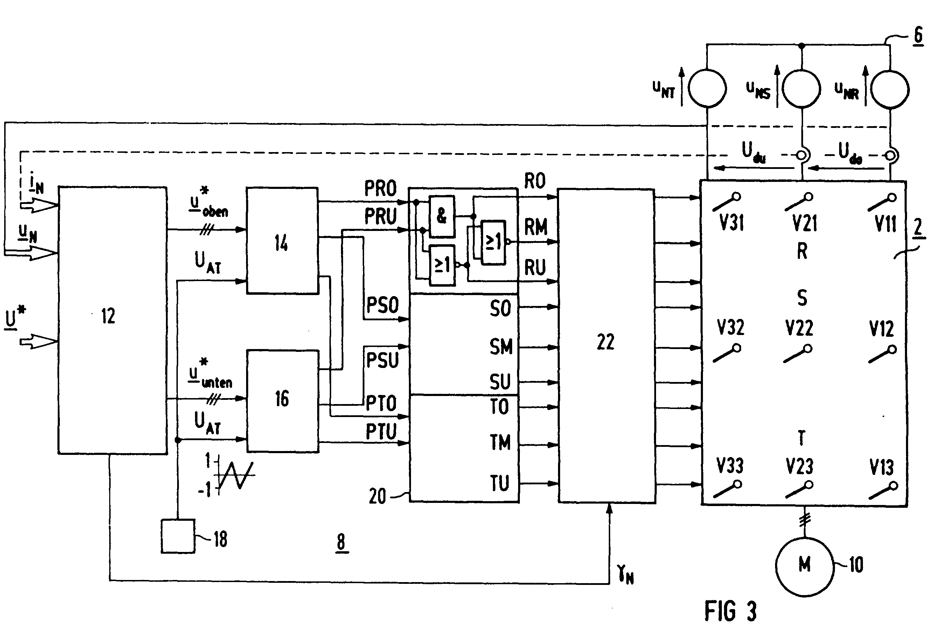

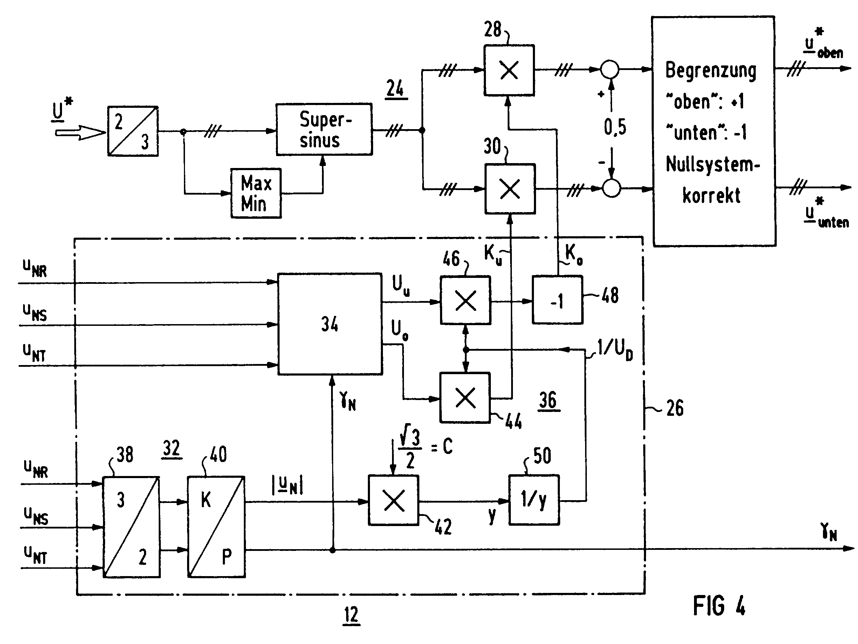

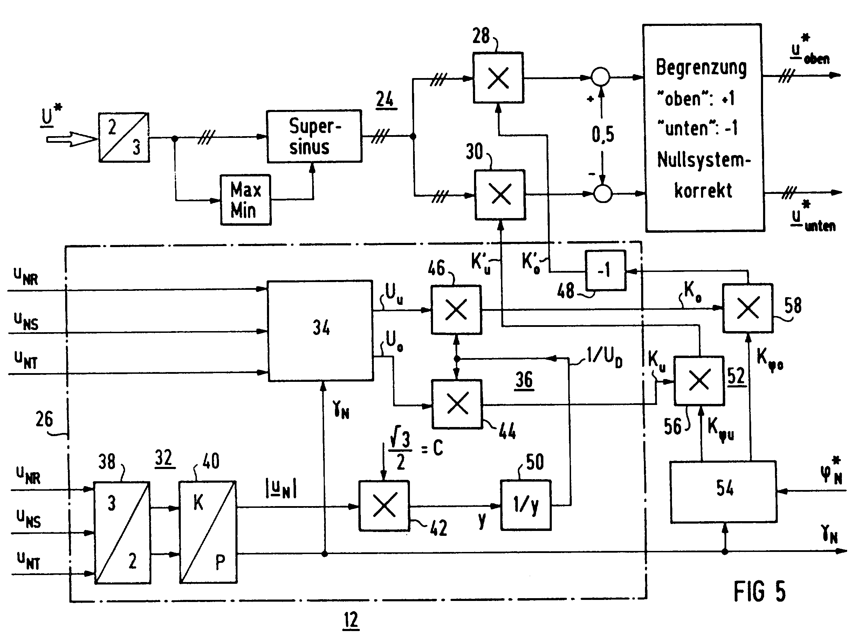

Die Figur 3 zeigt ein Blockschaltbild eines Steuersatzes 8 eines Matrix-Umrichters 2, der eingangsseitig an ein Drehstromnetz 6 angeschlossen und ausgangsseitig mit einem Induktionsmotor 10 versehen ist. Dieser Steuersatz 8 weist eine Vorrichtung 12 zur Erzeugung von Modulationssignalen $\underline{u}*_{oben}$ und $\underline{u}*_{unten}$, zwei Modulatoren 14 und 16, einen Hilfsspannungsgenerator 18, einen Zündimpulsbildner 20 und eine Zuordnungseinrichtung 22 auf. Der Vorrichtung 12 werden eingangsseitig die ermittelten Netzspannungs-Istwerte $u_{NR}$, $u_{NS}$ und $u_{NT}$ und ein von einer nicht näher dargestellten Regelung bestimmten Sollspannungszeiger $\underline{U}^*$ zugeführt, wobei die Figuren 4 und 5 jeweils eine Ausführungsform der Vorrichtung 12 näher darstellen. Ausgangsseitig ist diese Vorrichtung 12 mit den beiden Modulatoren 14 und 16 verknüpft, wobei die drei oberen Ausgänge der Vorrichtung 12 mit dem Modulator 14 und die drei unteren Ausgänge mit dem Modulator 16 verknüpft sind. Ein weiterer Eingang der Modulatoren 14 und 16 ist mit dem Hilfsspannungsgenerator 18 verbunden, der eine Abtastspannung $U_{AT}$, insbesondere eine dreieckförmige Abtastspannung, generiert. An den Ausgängen der Modulatoren 14 und 16 stehen jeweils binäre Modulationsimpulse PRO, PSO, PTO und PRU, PSU, PTU an, die durch Überlagerung der entsprechenden Modulationssignale $u_{Ro}^*$, $u_{So}^*$, $u_{To}^*$ und $u_{Ru}^*$, $u_{Su}^*$,

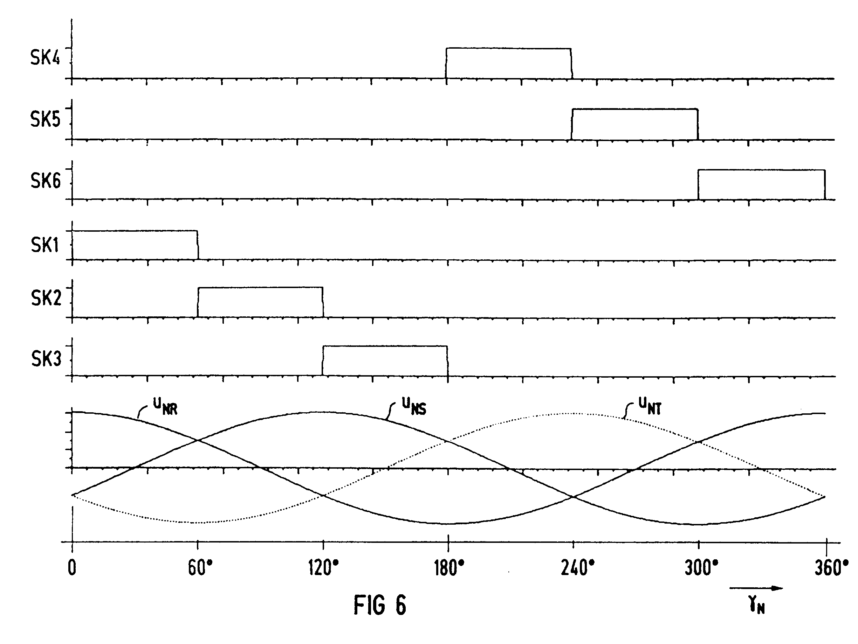

$u_{Tu}^*$ mit dem Abtastsignal $U_{AT}$ generiert wurden. Die binären Modulationsimpulse PRO, PSO, PTO und PRU, PSU, PTU zeigen an, ob das Abtastsignal $U_{AT}$ größer oder kleiner als das jeweilige Modulationssignal ist. Aus diesen Impulsen PRO, PSO, PTO und PRU, PSU, PTU werden mittels des Zündimpulsbildners 20 Impulse zum Schalten der Ventile V11,...,V33 in den Umrichterphasen R, S und T generiert. Aus den binären Modulationsimpulsen PRO und PRU der Phase R werden mittels des Zündimpulsbildners 20 Schaltimpulse RO, RM und RU erzeugt. Aus den binären Modulationsimpulsen PSO und PSU bzw. PTO und PTU der Phase S bzw. T werden ebenfalls Schaltimpulse SO, SM und SU bzw. TO, TM und TU generiert. Für die Phase R ist die Verknüpfung der binären Modulationsimpulse PRO und PRU zu den Schaltimpulsen RO, RM und RU anhand eines Teilblockschaltbildes des Zündimpulsbildners 20 veranschaulicht. Die erzeugten Schaltimpulse RO,...,TU werden mittels der Zuordnungseinrichtung 22 in Abhängigkeit eines ermittelten Netzwinkels $\gamma_N$ den Stromrichterventilen V11,...,V33 des Matrix-Umrichters 2 zugeordnet. Dazu wird anhand des Netzwinkels $\gamma_N$ ermittelt, in welchem Winkelbereich der Netzspannungszeiger liegt. Zur Festlegung der einzelnen Sektoren wird auf die Figur 6 verwiesen. Es wird definiert, daß beim Maximum des Netzspannungs-Istwertes $u_{NR}$ der Netzwinkel $\gamma_N=0°$ liegt. Die Netzwinkelperiode $0°\leq\gamma_N\leq360°$ wird in sechs 60°-Sektoren aufgeteilt, wobei der Sektor 1 bei $\gamma_N=0°$ beginnt und bei $\gamma_N=60°$ endet. Die Sektoren 1 bis 6 sind wie folgt definiert:

| | | | | | |
|---|---|---|---|---|---|
| SK1: | 0° | ≤ | $\gamma_N$ | < | 60° |
| SK2: | 60° | ≤ | $\gamma_N$ | < | 120° |
| SK3: | 120° | ≤ | $\gamma_N$ | < | 180° |
| SK4: | 180° | ≤ | $\gamma_N$ | < | 240° |
| SK5: | 240° | ≤ | $\gamma_N$ | < | 300° |
| SK6: | 300° | ≤ | $\gamma_N$ | < | 360° |

Mit Hilfe dieser Sektorkennung wird die Zuordnung der Schaltimpulse RO,...,TU zu den Stromrichterventilen V11,...,V33 gemäß folgender Tabelle

| Zuordnung Ventile | SK1 | SK2 | SK3 | SK4 | SK5 | SK6 |
|---|---|---|---|---|---|---|
| V11 | RO | RM | RU | RU | RM | RO |
| V21 | SO | SM | SU | SU | SM | SO |
| V31 | TO | TM | TU | TU | TM | TO |
| | | | | | | |
| V12 | RM | RO | RO | RM | RU | RU |
| V22 | SM | SO | SO | SM | SU | SU |
| V32 | TM | TO | TO | TM | TU | TU |
| | | | | | | |
| V13 | RU | RU | RM | RO | RO | RM |
| V23 | SU | SU | SM | SO | SO | SM |
| V33 | TU | TU | TM | TO | TO | TM |

festgelegt.

Der Aufbau dieses Steuersatzes 8 ist ohne die Zuordnungseinrichtung 22 und mit einer vereinfachten Vorrichtung 12 zur Erzeugung von zwei dreiphasigen Modulationssignalen $u_{Ro}^*$, $u_{So}^*$, $u_{To}^*$ und $u_{Ru}^*$, $u_{Su}^*$, $u_{Tu}^*$ aus einem vorbestimmten Sollspannungszeiger $\underline{U}^*$, d.h. ohne den erfindungsgemäßen Teil, aus der EP 0 356 547 B1 bekannt. Der Steuersatz dieser EP 0 356 547 B1 ist für einen Dreipunkt-Wechselrichter mit symmetrischem Zwischenkreis vorgesehen.

In der Figur 4 ist ein Blockschaltbild einer ersten Ausführungsform der Vorrichtung 12 zur Erzeugung von zwei dreiphasigen Modulationssignalen $u_{Ro}^*$, $u_{So}^*$, $u_{To}^*$ und $u_{Ru}^*$, $u_{Su}^*$, $u_{Tu}^*$ aus einem vorbestimmten Sollspannungszeiger $\underline{U}^*$ in Abhängigkeit von den ermittelten Netzspannungs-Istwerten $u_{NR}$, $u_{NS}$ und $u_{NT}$ näher dargestellt. Diese Vorrichtung 12 besteht aus einem aus der EP 0 356 547 B1 bekannten Teilsystembildner 24, einer Einrichtung 26 zur Bildung eines oberen und unteren Korrekturfaktors $K_o$ und $K_u$ und dreier oberer und dreier unterer Multiplizierer 28 und 30. Der Aufbau des Teilsystembildners 24 entspricht beispielsweise dem Aufbau des Teilsystembildners TSB gemäß der Figur 4 der EP 0 356 547 B1. Da der Teilsystembildner 24 in der EP 0 356 547 B1 in mehreren Ausführungsformen ausführlich beschrieben ist, wird an dieser Stelle nur der Aufbau der Einrichtung 26 zur Bildung eines oberen und unteren Korrekturfaktors $K_o$ und $K_u$ beschrieben.

Die Einrichtung 26 weist eingangsseitig einerseits eine Transformationseinrichtung 32 und andererseits eine Zuordnungseinrichtung 34 und ausgangsseitig eine Rechenschaltung 36 auf. Die Transformationseinrichtung 32 besteht aus einem ersten und zweiten Koordinatenwandler 38 und 40. Der erste Koordinatenwandler 38 wandelt die drei ermittelten Netzspannungs-Istwerte $u_{NR}$, $u_{NS}$ und $u_{NT}$ in zwei kartesische Komponenten des durch die Netzspannungs-Istwerte $u_{NR}$, $u_{NS}$ und $u_{NT}$ bestimmten Netzspannungszeigers $\underline{u}_N$ um. Diese kartesischen Komponenten werden mittels des zweiten Koordinatenwandlers 40 in polare Komponenten "Betrag $|\underline{U}_N|$" und "Netzwinkel $\gamma_N$" gewandelt. Die polare Komponente "Betrag $|\underline{U}_N|$" wird der Rechenschaltung 36 und die polare Komponente "Netzwinkel $\gamma_N$" wird der Zuordnungseinrichtung 34 zugeführt. Der Zuordnungseinrichtung 34 werden außerdem die ermittelten Netzspannungs-Istwerte $u_{NR}$, $u_{NS}$ und $u_{NT}$ zugeführt. Diese Zuordnungseinrichtung 34 ordnet den ausgangsseitigen Korrekturwerten $U_u$ und $U_o$ in Abhängigkeit vom ermittelten Netzwinkel $\gamma_N$ die eingangsseitig anstehende Netzspannungs-Istwerte $u_{NR}$, $u_{NS}$ und $u_{NT}$ zu. Mit Hilfe des Netzwinkels $\gamma_N$ wird zunächst ein Sektor ermittelt und mit diesem Sektor aus der nachfolgenden Tabelle

| Zuordnung Netz | SK1 | SK2 | SK3 | SK4 | SK5 | SK6 |
|---|---|---|---|---|---|---|
| $U_o$ | $u_{NR}$ | $u_{NS}$ | $u_{NS}$ | $u_{NT}$ | $u_{NT}$ | $u_{NR}$ |
| $U_u$ | $u_{NT}$ | $u_{NT}$ | $u_{NR}$ | $u_{NR}$ | $u_{NS}$ | $u_{NS}$ |

die entsprechenden eingangs anstehenden Netzspannungs-Istwerte $u_{NR}$, $u_{NS}$ und $u_{NT}$ als Korrekturwerte $U_u$ und $U_o$ ausgegeben. Diese Korrekturwerte $U_o$ und $U_u$ werden ebenfalls der Rechenschaltung 36 zugeführt.

Die Rechenschaltung 36 besteht aus drei Multiplizierern 42, 44 und 46, einem Vorzeichenwechsler 48 und einem Reziprokbildner 50. Der eine Eingang des Multiplizierers 42 ist mit dem Betrag-Ausgang des Koordinatenwandlers 40 der Transformationseinrichtung 32 verknüpft, wobei an seinem zweiten Eingang eine Komponente $C = \sqrt{3}/2$ ansteht. Ausgangsseitig ist dieser Multiplizierer 42 über den Reziprokbildner 50 mit jeweils einem Eingang der Multiplizierer 44 und 46 verbunden. Ein weiterer Eingang des Multiplizierers 44 ist mit dem oberen Ausgang der Zuordnungseinrichtung 34 verbunden, an dem der Korrekturwert $U_o$ ansteht, wogegen ein weiterer Eingang des Multiplizierers 46 mit dem unteren Ausgang der Zuordnungseinrichtung 34 verbunden ist, an dem der Korrekturwert $U_u$ ansteht. Der Ausgang dieses Multiplizierers 46 ist mittels des Vorzeichenwechslers 48 jeweils mit einem Eingang der drei oberen Multiplizierer 28 verbunden. Der Multiplizierer 44 der Rechenschaltung 36 ist ausgangsseitig jeweils mit einem Eingang der drei unteren Multiplizierer 30 verbunden. Die drei oberen und die drei unteren Multiplizierer 28 und 30 sind jeweils in einem oberen und unteren Modulationskanal integriert, so daß die Sollspannungs-Amplitude (=Soll-Aussteuerung A*) mit erzeugten Korrekturfaktoren $K_o$ und $K_u$ gewichtet wird und einem oberen (index o) bzw. einem unteren (index u) Teilsystem zugeordnet:

$$A_o^* = A^* \cdot K_o$$

$$A_u^* = A^* \cdot K_u$$

Die dadurch entstehenden Modulationssignale mit unterschiedlicher Amplitude der Teilsysteme werden im weiteren genauso behandelt wie beim in EP 0 356 547 B1 beschriebenen Verfahren zur Steuerung eines Dreipunkt-Wechselrichters durch Beaufschlagung mit Nullsystemen (Verschiebung, Begrenzung). Die Begrenzung darf dabei auch hier nicht durch bloßes "Abschneiden" erfolgen, sondern muß sich für das Gesamtsystem wie eine Nullsystemmanipulation darstellen, d.h., jede Begrenzung eines Modulationssignals muß durch Korrektur an den anderen Modulationssignalen berücksichtigt werden.

Die Korrekturfaktoren $K_o$ und $K_u$ werden so bestimmt, daß die Ausgangsspannungen $U_R$, $U_S$ und $U_T$ des Matrix-Umrichters 2 ihrem Sollwert $\underline{U}^*$ folgen.

Die an den Ausgängen der Zuordnungseinrichtung 34 anstehenden Korrekturwerte $U_o$ und $U_u$ werden in der Rechenschaltung 36 mit einem Faktor $U_D$ gewichtet, der aus der Netzspannungsamplitude $|U_N|$ bestimmt wird. Das heißt, die Korrekturfaktoren $K_o$ und $K_u$ werden gemäß folgender Gleichungen:

$$K_o = - \frac{1}{U_D} \cdot U_u$$

$$K_u = \frac{1}{U_D} \cdot U_o$$

bestimmt, wogegen der Faktor $U_D$ gemäß folgender Gleichung:

$$U_D = |U_N| \cdot \frac{\sqrt{3}}{2}$$

berechnet wird. Bei einer vorteilhaften Ausführungsform ist die Einrichtung 26 zur Bildung eines oberen und unteren Korrekturfaktors $K_o$ und $K_u$ Bestandteil eines Steuersatzrechners. Der Wert des Faktors $U_D$ entspricht einer Teilzwischenkreisspannung bei einem Dreipunkt-Wechselrichter, wobei dort die beiden Teilzwischenkreisspannungen $U_{Do}$ und $U_{Du}$ gleich groß sind.

Dieser Sonderfall tritt beim Matrix-Umrichter 2 bei Netzwinkeln $\gamma_N$=30°, 90°, ...., 330° auf, wobei sich für diese Augenblicke identische Korrekturfaktoren $K_o$=$K_u$=1 ergeben. Nur in diesen Augenblicken stimmen daher die Werte der Modulationssignale $\underline{u}^*_{oben}$ und $\underline{u}^*_{unten}$ beim Matrix-Umrichter 2 und Dreipunkt-Wechselrichter überein.

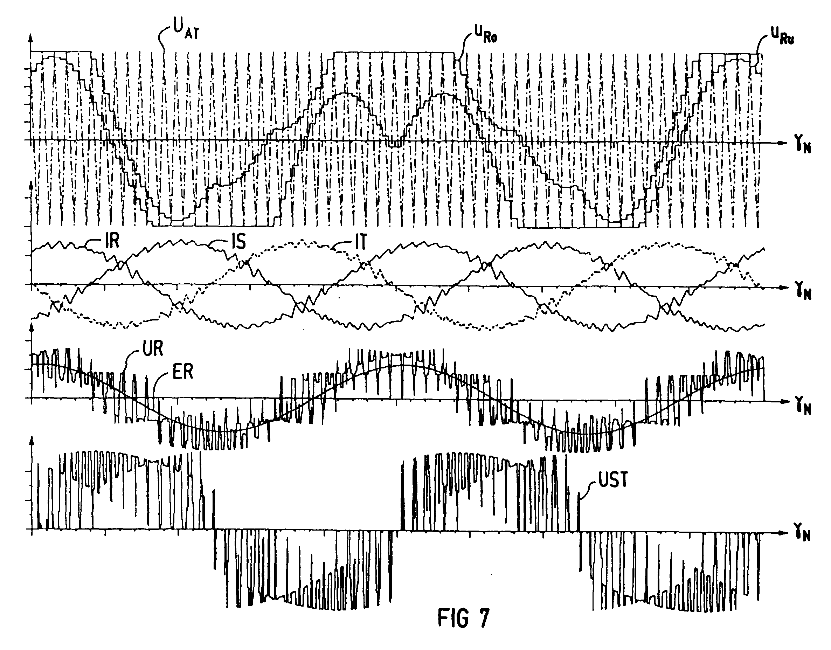

Die Figur 7 zeigt in mehreren Diagrammen die Umrichterausgangsgrößen (Ausgangsströme IR, IS und IT, eine Phasenausgangsspannung UR und die zugehörige sinusförmige Maschinen-Gegenspannung ER und eine verkettete Ausgangsspannung UST). Im oberen Teil dieser Figur 7 sind zusätzlich die Modulationssignale URO und URU der Phase R, die an den Ausgängen der Vorrichtung 12 für einen Netzleistungsfaktor $\cos\varphi_N$=1 anstehen, sowie die Abtastsignal UAT dargestellt.

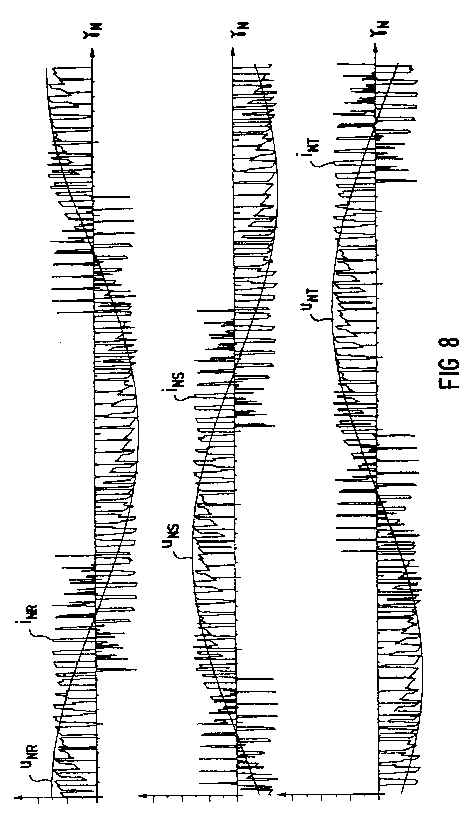

Die Figur 8 zeigt die zugehörigen Netzgrößen (Netzspannungen UNR, UNS, UNT und gepulste Netzströme INR, INS, INT) für den theoretischen Fall einer idealen Kommutierung, d.h., Betrieb des Matrix-Umrichters 2 an einer idealen Netzspannungsquelle ohne Netzreaktanzen. Diese Umrichterausgangsgrößen und die zugehörigen Netzgrößen sind bei einer Aussteuerung von A=0,864 und mit konstanter Schaltfrequenz aufgenommen worden. In der Praxis sind aufgrund stets vorhandener Netzreaktanzen Kommutierungshilfskreise am Umrichtereingang erforderlich (z.B. in Form netzseitiger Kondensatoren). Zusammen mit der zusätzlich netzseitig erforderlichen Abkoppelinduktivität entsteht dadurch netzseitig ein Filter zweiter Ordnung, das die pulsfrequenten Oberschwingungen zum Netz hin deutlich abschwächt und dadurch nahezu sinusförmige Netzströme bewirkt.

Die Figur 5 zeigt ein Blockschaltbild einer vorteilhaften Ausführungsform der Vorrichtung 12 zur Erzeugung von zwei dreiphasigen Modulationssignalen $u^*_{Ro}$, $u^*_{So}$, $u^*_{To}$ und $u^*_{Ru}$, $u^*_{Su}$, $u^*_{Tu}$ aus einem vorbestimmten Sollspannungszeiger $\underline{U}^*$ in Abhängigkeit von den ermittelten Netzspannungs-Istwerten $u_{NR}$, $u_{NS}$ und $u_{NT}$. Diese vorteilhafte Ausführungsform unterscheidet sich von der Ausführungsform nach Figur 4 dadurch, daß eine Einrichtung 52 zur Bildung eines zusätzlichen oberen und unteren Korrekturfaktors $K_{\varphi o}$ und $K_{\varphi u}$ vorgesehen ist. Da diese Ausführungsform sonst identisch mit der Ausführungsform nach Figur 4 ist, wird nur der Aufbau und die Wirkungsweise der Einrichtung 52 beschrieben.

Die Einrichtung 52 zur Bildung eines zusätzlichen oberen und unteren Korrekturfaktors $K_{\varphi o}$ und $K_{\varphi u}$ weist eingangsseitig eine Recheneinrichtung 54 und ausgangsseitig zwei Multiplizierer 56 und 58 auf. Diese Multiplizierer 56 und 58 sind eingangsseitig einerseits jeweils mit einem Ausgang der Einrichtung 52 und andererseits mit einem Ausgang des oberen und unteren Multiplizierers 44 und 46 der Rechenschaltung 36 der Einrichtung 26 zur Bildung eines oberen und unteren Korrekturfaktors $K_o$ und $K_u$ und ausgangsseitig jeweils mit den drei unteren Multiplizierern 30 und den drei oberen Multiplizierern 28 des Teilsystembildnern 24 verbunden, wobei der Vorzeichenwechsler 48 dem Multiplizierer 58 nachgeschaltet ist. Dieser Vorzeichenwechsler 48 kann auch dem Multiplizierer 46 der Rechenschaltung 36 wie in der Figur 4 nachgeschaltet sein. Die Recheneinrichtung 54 ist eingangsseitig mit dem Winkel-Ausgang des zweiten Koordinatenwandlers 40 der Transformationseinrichtung 32 der Einrichtung 26 verbunden, wobei an einem zweiten Eingang dieser Recheneinrichtung 54 ein vorbestimmter Stromwinkel $\varphi^*_N$ ansteht. In der Recheneinrichtung werden mit Hilfe von Kreisfunktionen die zusätzlichen oberen und unteren Korrekturfaktoren $K_{\varphi o}$ und $K_{\varphi u}$ berechnet.

Dabei wird der zusätzliche untere Korrekturfaktor $K_{\varphi u}$ unmittelbar aus dem gewünschten Netz-Leistungsfaktor $\cos\varphi^*_N$ berechnet und der zusätzliche obere Korrekturfaktor $K_{\varphi o}$ aussteuerungsrichtig angebracht. Mit diesen zusätzlichen Korrekturfaktoren $K_{\varphi o}$ und $K_{\varphi u}$ werden nun die für einen Netzleistungsfaktor $\cos\varphi_N$=1 berechneten Korrekturfaktoren $K_o$ und $K_u$ für einen gewünschten Netzleistungsfaktor $\cos\varphi^*_N$ gemäß den nachfolgenden Gleichungen

$$K'_o = K_o \cdot K_{\varphi o}$$

$$K'_u = K_u \cdot K_{\varphi u}$$

angepaßt, wobei $K'_o$ und $K'_u$ die angepaßten Korrekturfaktoren sind, die die Amplituden der Modulationssignale des Teilsystembildners 24 wichten. Bei einem Netz-Leistungsfaktor $\cos\varphi_N$=1 sind die zusätzlichen Korrekturfaktoren $K_{\varphi o}$ und $K_{\varphi u}$ ebenfalls jeweils 1.

Durch die Anpassung der ermittelten Korrekturfaktoren $K_o$ und $K_u$ an vorbestimmte Stromwinkel $\varphi_N^*$ ist es möglich, innerhalb der Grenzen der verfügbaren Spannungen des Matrix-Umrichters 2 damit auch eine Blindleistungsverstellung am Umrichtereingang unabhängig vom Ausgang vorzunehmen.

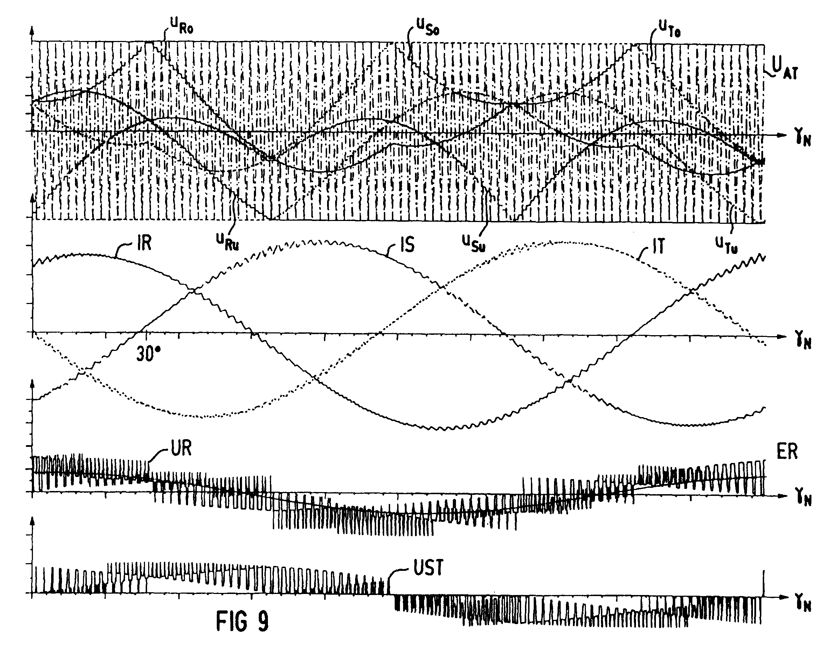

In der Figur 9 sind in mehreren Diagrammen die Umrichterausgangsgrößen (Ausgangsströme IR, IS, IT, eine Ausgangsspannung UR mit zugehöriger sinusförmiger Maschinengegenspannung ER und eine verkettete Ausgangsspannung UST) für eine Aussteuerung A=0,65 mit konstanter Schaltfrequenz dargestellt. Außerdem sind in einem oberen Teil der Figur 9 zusätzlich die Modulationssignale URO, USO, UTO, URU, USU und UTU und das Abtastsignal UAT dargestellt.

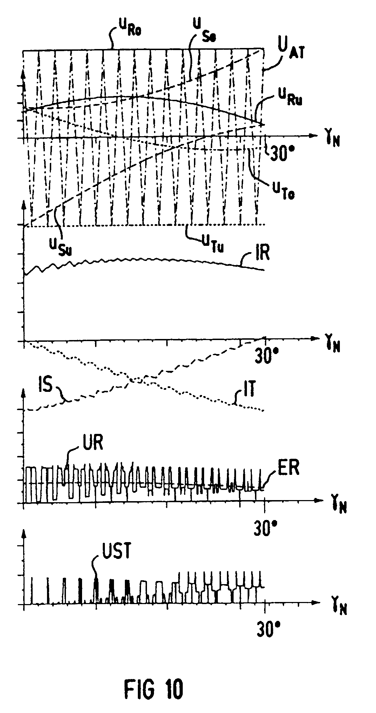

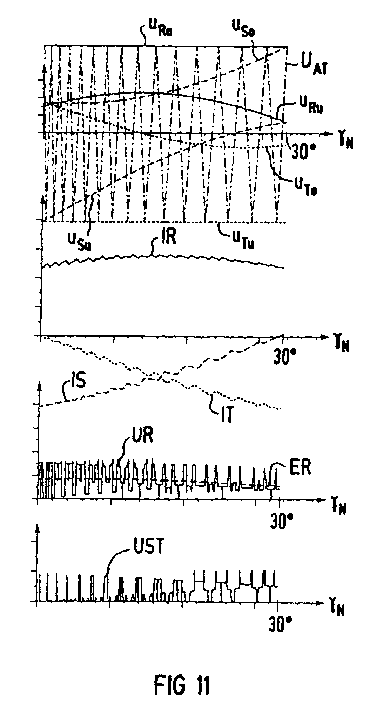

Die Figuren 10 und 11 zeigen jeweils den vergrößerten ersten Ausschnitt ($0 \leq \gamma_N \leq 30°$) der Signale der Figur 9, wobei die Schaltfrequenz bei der Darstellung der Signale gemäß Figur 11 variabel ist. Die Schaltfrequenz wurde um den 4-fachen Wert variiert. Die positive Wirkung auf den Oberschwingungsgehalt der Ströme ist aus dem Vergleich der Signalverläufe der Figuren 10 und 11 deutlich erkennbar.

Die Art der Verstellung ist aber unerheblich (linear, quadratisch, Winkelfunktion, etc. als Funktion des Netzwinkels $\gamma_N$).

Wichtig ist dagegen aussteuerungabhängig eine geeignete Variationsbreite vorzugeben. In der Praxis wäre dies in Form einer Tabelle denkbar, die für jedes Wertepaar aus Aussteuerung A* und Netzwinkel $\gamma_N$ einen Faktor (i.a.<>1) enthält, der die Dauer einer Schaltperiode verstellt. Da die Modulation auch ohne die Option problemlos abläuft, kann die Tabelle auch zunächst mit "1" vorbesetzt sein. Ausgehend von diesem nicht oberschwingungsoptimalen Fall kann entweder bei der Inbetriebnahme und/oder während des Betriebes anhand einer Oberschwingungsanalyse eine Verstellung dieser Tabellenwerte erfolgen und somit können die Strom-Oberschwingungen vergleichmäßigt werden, d.h., der Oberschwingungsgehalt wird insgesamt deutlich reduziert. Dieses vom Zweipunkt-Wechselrichterprinzip bekannte Verfahren kann hier mit deutlich verstärkter Wirkung vorteilhaft eingesetzt werden.

**Patentansprüche**

1. Verfahren zur Erzeugung zweier dreiphasiger, phasengleicher und zu einander nullpunktversthobener Modulationssignale ($u_{Ro}^*$, $u_{So}^*$, $u_{To}^*$ ; $u_{Ru}^*$, $u_{Su}^*$, $u_{Tu}^*$) für einen pulsweitenmodulierenden Steuersatz (8) eines Matrix-Umrichters (2) aus einem vorbestimmten Spannungssollvektor ($\underline{u}^*$), wobei vorhandene dreiphasige Modulationssignale einer Zweifachmodulation mittels eines oberen und unteren Korrekturfaktors ($K_o$, $K_u$) gewichtet werden, wobei diese Korrekturfaktoren ($K_o$, $K_u$) in Abhängigkeit eines ermittelten Netzspannungswinkels ($\gamma_N$) und ermittelter Netzspannungs-Istwerten ($u_{NR}$, $u_{NS}$, $u_{NT}$) bestimmt werden.

2. Verfahren nach Anspruch 1, gekennzeichnet durch folgende Verfahrensschritte:

   a) Transformation der gemessenen Netzspannungen ($u_{NR}$, $u_{NS}$, $u_{NT}$) in polare Koordinaten ($|U_N|$, $\gamma_N$) eines Netzspannungsvektors ($\underline{u}_N$),
   b) Bestimmung eines oberen und eines unteren Spannungswertes ($U_o$, $U_u$), indem in Abhängigkeit des ermittelten Netzspannungswinkels ($\gamma_N$) sektorweise ein Spannungswert einer gemessenen Netzspannung ($u_{NR}$, $u_{Ns}$, $u_{NT}$) als oberer oder unterer Spannungswert ($U_o$, $U_u$) angegeben wird,
   c) Bildung eines Faktors ($1/U_D$), indem die ermittelte Netzspannungsamplitude ($|U_N|$) mit einer Konstanten (C) multipliziert und der Kehrwert dieses Produkts gebildet wird,
   d) Bildung eines oberen und eines unteren Korrekturfaktors ($K_o$, $K_u$), indem der untere Spannungswert ($U_u$) mit dem gebildeten Faktor ($1/U_D$) und mit einem negativen Vorzeichen und der obere Spannungswert ($U_o$) mit dem gebildeten Faktor ($1/U_D$) multipliziert werden, und
   e) Korrektur der Sollspannungsamplituden (A*) der oberen und unteren Modulationssignale ($u_{Ro}^*$, $u_{So}^*$, $u_{To}^*$ ; $u_{Ru}^*$, $u_{Su}^*$, $u_{Tu}^*$), indem die Amplituden (A*) der oberen Modulationssignale ($u_{Ro}^*$, $u_{So}^*$, $u_{To}^*$) mit dem gebildeten oberen Korrekturfaktor ($K_o$) und die Amplituden (A*) der unteren Modulationssignale ($u_{Ru}^*$, $u_{Su}^*$, $u_{Tu}^*$) mit dem gebildeten unteren Korrekturfaktor ($K_u$) multipliziert werden.

3. Verfahren nach Anspruch 1, wobei die ermittelten Korrekturfaktoren ($K_o$, $K_u$) mit zusätzlichen Korrekturfaktoren ($K_{\varphi o}$, $K_{\varphi u}$) für einen vorbestimmten Netzleistungsfaktor ($\cos\varphi_N^*$) gewichtet werden, wobei diese zusätzlichen Korrekturfaktoren ($K_{\varphi o}$, $K_{\varphi u}$) in Abhängigkeit von einem vorbestimmten Stromwinkel ($\varphi_N^*$) und von einem ermittelten Netzspannungswinkel ($\gamma_N$) berechnet werden.

4. Pulsweitenmoduliertes Steuerverfahren zur Generierung von Schaltimpulsen (RO, RM, RU, SO, SM, SU, TO, TM, TU) für einen Matrix-Umrichter (2), wobei in Abhängigkeit von einem Abtastsignal ($U_{AT}$) und den beiden nach einem der vorgenannten Ansprüche 1 bis 3 erzeugten dreiphasigen Modulationssignalen ($u_{Ro}^*$, $u_{So}^*$, $u_{To}^*$ ; $u_{Ru}^*$, $u_{Su}^*$, $u_{Tu}^*$)

binäre obere und untere Modulationsimpulse (PRO, PSO, PTO;PRU, PSU, PTU) gebildet werden, die phasenmäßig zu Schaltimpulsen (RO,RM,RU;SO,SM,SU;TO,TM,TU) zusammengesetzt werden, die in Abhängigkeit des bestimmten Netzspannungswinkels ($\gamma_N$) den Stromrichterventilen (V11, ..., V33) des Matrix-Umrichters (2) zugeordnet werden.

5. Pulsweitenmoduliertes Verfahren nach Anspruch 4, wobei die Frequenz des Abtastsignals ($U_{AT}$) in Abhängigkeit von dem ermittelten Netzspannungswinkel ($\gamma_N$) verstellt wird, wobei die Art der Verstellung beliebig ist.

6. Vorrichtung zur Durchführung des Verfahrens nach Anspruch 1, bestehend aus einem Teilsystembildner (24), dessen obere und untere Ausgänge jeweils mit einem oberen und unteren Multiplizierer (28,30), an dessen Ausgängen die Modulationssignale ($u_{Ro}^*$, $u_{So}^*$, $u_{To}^*$ ; $u_{Ru}^*$, $u_{Su}^*$, $u_{Tu}^*$) anstehen, verknüpft sind, und einer Einrichtung (26) zur Bildung eines oberen und eines unteren Korrekturfaktors ($K_o$, $K_u$), der eingangsseitig ermittelte Netzspannungs-Istwerte ($u_{NR}$, $u_{NS}$, $u_{NT}$) zugeführt sind und die ausgangsseitig jeweils mit einem weiteren Eingang der beiden Multiplizierer (28,30) verbunden ist.

7. Vorrichtung nach Anspruch 6, wobei die Einrichtung (26) zur Bildung eines oberen und eines unteren Korrekturfaktors ($K_o$, $K_u$) eingangsseitig einerseits eine Transformationseinrichtung (32) und andererseits ein Zuordnungseinrichtung (34) und ausgangsseitig eine Rechenschaltung (36), bestehend aus drei Multiplizierern (42, 44,46), einem Vorzeichenwechsler (48) und einem Reziprokbildner (50), aufweist, wobei an den Eingängen der Transformationseinrichtung (32) und der Zuordnungseinrichtung (34) die gemessene Netzspannungs-Istwerte ($u_{NR}$, $u_{NS}$, $u_{NT}$) anstehen, wobei der obere und untere Ausgang der Zuordnungseinrichtung (34) und der Betragsausgang der Transformationseinrichtung (32) jeweils mit einem Eingang eines Multiplizierers (44,46,42) verknüpft sind, wobei der Winkelausgang der Transformationseinrichtung (32) mit einem Steuereingang der Zuordnungseinrichtung (34) verbunden ist, wobei der Ausgang des der Transformationseinrichtung (32) nachgeschalteten Multiplizierers (42), an dessen zweitem Eingang eine Konstante (C) ansteht, über dem Reziprokbildner (50) jeweils mit einem weiteren Eingang des der Zuordnungseinrichtung (34) nachgeschalteten oberen und unteren Multiplizierer (44,46) verbunden ist und wobei der Ausgang des oberen Multiplizierers (44) dieser Einrichtung (36) mit einem weiteren Eingang der dem Teilsystembildner (24) nachgeschalteten unteren Multiplizierer (30) und der Ausgang des unteren Multiplizierers (46) dieser Einrichtung (36) über den Vorzeichenwechsler (48) mit jeweils einem Eingang der dem Teilsystembildner (24) nachgeschalteten oberen Multiplizierer (28) verbunden sind.

8. Vorrichtung nach Anspruch 6, wobei eine Einrichtung (52) zur Bildung eines zusätzlichen oberen und unteren Korrekturfaktors ($K_{\varphi o}$, $K_{\varphi u}$) vorgesehen ist, die eingangsseitig eine Recheneinrichtung (54) und ausgangsseitig zwei Multiplizierer (56,58) aufweist, wobei diese Multiplizierer (56,58) jeweils eingangsseitig einerseits mit einem Ausgang der Recheneinrichtung (54) und andererseits mit einem Ausgang eines Multiplizierers (44,46) der Einrichtung (36) zur Bildung eines oberen und unteren Korrekturfaktors ($K_o$, $K_u$) und ausgangsseitig mit jeweils einem weiteren Eingang der dem Teilsystembildner (24) nachgeschalteten unteren und oberen Multiplizierer (30,28) verknüpft sind und wobei die Recheneinrichtung (54) eingangsseitig mit dem Winkelausgang der Einrichtung (26) zur Bildung eines oberen und unteren Korrekturfaktors ($K_o$, $K_u$) verknüpft ist und an einem zweiten Eingang dieser Recheneinrichtung (54) ein vorbestimmter Stromwinkel ($\varphi_N^*$) ansteht.

9. Steuersatz (8) zur Durchführung des Verfahrens zur Generierung von Schaltimpulsen (RO, RM, RU, SO, SM, SU, TO, TM, TU) für einen dreiphasigen Matrix-Umrichter (2), nach Anspruch 4 bestehend aus einem Teilsystembildner (24), zwei Modulatoren (14,16), einem Hilfsspannungsgenerator (18), einem Zündimpulsbildner (20), einer Einrichtung (26) zur Bildung eines oberen und unteren Korrekturfaktors ($K_o$, $K_u$), drei oberen und drei unteren Multiplizierern (28,30) und einer Zuordnungseinrichtung (22), wobei die beiden Modulatoren (14, 16) eingangsseitig jeweils mit dem Hilfsspannungsgenerator (18) und mit den Ausgängen der oberen bzw. unteren Multiplizierer (28,30) und ausgangsseitig über den Zündimpulsbildner (20) mit der Zuordnungseinrichtung (22) verknüpft sind, wobei die oberen und unteren Multiplizierer (28,30) jeweils eingangsseitig einerseits mit den oberen und unteren Ausgängen des Teilsystembildners (24) und andererseits mit einem Ausgang der Einrichtung (26) zur Bildung eines oberen und unteren Korrekturfaktors ($K_o$, $K_u$) verknüpft sind, wobei die Zuordnungseinrichtung (22) mit dem Winkelausgang der Einrichtung (12) verbunden ist und wobei dem Teilsystembildner (24) ein vorbestimmter Spannungssollvektor ($\underline{u}^*$) und der Einrichtung (26) ermittelte Netzspannungs-Istwerte ($u_{NR}$, $u_{NS}$, $u_{NT}$) zugeführt sind.

10. Steuersatz (8) nach Anspruch 9, wobei der Hilfsspannungsgenerator (18) mit dem Winkelausgang der Einrichtung (26) verbunden ist, wobei der Winkelausgang der Einrichtung (26) auf die Frequenz des Hilfsspannungsgenerator (18) wirkt.

**11.** Steuersatz (8) nach Anspruch 9, wobei zur Realisierung seiner Bestandteile (24,14,16,18,20,26,28,30,22) ein Mikroprozessor vorgesehen ist.

**Claims**

1. Method for generating two three-phase, cophasal modulation signals ($u_{Ro}^*$, $u_{So}^*$, $u_{To}^*$ ; $u_{Ru}^*$, $u_{Su}^*$, $u_{Tu}^*$) which are zero-displaced with respect to each other, for pulse-width-modulating trigger equipment (8) of a matrix converter (2) comprising a predetermined desired voltage vector ($\underline{u}^*$), with present three-phase modulation signals of a dual modulation being weighted by means of an upper and lower correction factor ($K_o$, $K_u$), with these correction factors ($K_o$, $K_u$) being determined in dependence upon a determined system voltage angle ($\gamma_N$) and determined actual system voltage values ($u_{NR}$, $u_{NS}$, $u_{NT}$).

2. Method according to claim 1, characterized by the following procedural steps:

   a) transformation of the measured system voltages ($u_{NR}$, $u_{NS}$, $u_{NT}$) into polar coordinates ($|u_N|$, $\gamma_N$) of a system voltage vector ($\underline{u}_N$),
   b) determination of an upper and a lower voltage value ($U_o$, $U_u$), in that in dependence upon the determined system voltage angle ($\gamma_N$) in sectors a voltage value of a measured system voltage ($u_{NR}$, $u_{NS}$, $u_{NT}$) is indicated as upper or lower voltage value ($U_o$, $U_u$),
   c) formation of a factor ($1/U_D$), in that the determined system voltage amplitude ($|U_N|$) is multiplied by a constant (C) and the reciprocal value of this product is formed,
   d) formation of an upper and a lower correction factor ($K_o$, $K_u$), in that the lower voltage value ($U_u$) is multiplied by the formed factor ($1/U_D$) and by a negative sign, and the upper voltage value ($U_o$) is multiplied by the formed factor ($1/U_D$), and
   e) correction of the desired voltage amplitudes (A*) of the upper and lower modulation signals ($u_{Ro}^*$, $u_{So}^*$, $u_{To}^*$ ; $u_{Ru}^*$, $u_{Su}^*$, $u_{Tu}^*$), in that the amplitudes (A*) of the upper modulation signals ($u_{Ro}^*$, $u_{So}^*$, $u_{To}^*$) are multiplied by the formed upper correction factor ($K_o$), and the amplitudes (A*) of the lower modulation signals ($u_{Ru}^*$, $u_{Su}^*$, $u_{Tu}^*$) are multiplied by the formed lower correction factor ($K_u$).

3. Method according to claim 1, with the determined correction factors ($K_o$, Ku) being weighted with additional correction factors ($K_{\varphi o}$, $K_{\varphi u}$) for a predetermined system power factor ($\cos\varphi_N^*$), with these additional correction factors ($K_{\varphi o}$, $K_{\varphi u}$) being calculated in dependence upon a predetermined current angle ($\varphi_N^*$) and a determined system voltage angle ($\gamma_N$).

4. Pulse-width-modulated control method for generating switching pulses (RO, RM, RU, SO, SM, SU, TO, TM, TU) for a matrix converter (2), wherein in dependence upon a sampling signal ($U_{AT}$) and the two three-phase modulation signals ($u_{Ro}^*$, $u_{So}^*$, $u_{To}^*$ ; $u_{Ru}^*$, $u_{Su}^*$, $u_{Tu}^*$) generated according to one of the aforementioned claims 1 to 3, binary upper and lower modulation pulses (PRO, PSO, PTO ; PRU, PSU, PTU) are formed which are assembled in terms of phases to form switching pulses (RO,RM,RU;SO,SM,SU;TO,TM,TU) which, in dependence upon the determined system voltage angle ($\gamma_N$), are allocated to the power converter valves (V11, ...,V33) of the matrix converter (2).

5. Pulse-width-modulated method according to claim 4, wherein the frequency of the sampling signal ($U_{AT}$) is adjusted in dependence upon the determined system voltage angle ($\gamma_N$), with the type of adjustment being arbitrary.

6. Device for carrying out the method according to claim 1, comprising a partial system former (24), the upper and lower outputs of which are respectively connected to an upper and lower multiplier (28,30), at the outputs of which the modulation signals ($u_{Ro}^*$, $u_{So}^*$, $u_{To}^*$ ; $u_{Ru}^*$, $u_{Su}^*$, $u_{Tu}^*$) are present, and a device (26) for forming an upper and a lower correction factor ($K_o$, $K_u$), to which device actual system voltage values ($u_{NR}$, $u_{NS}$, $u_{NT}$) determined on the input side are supplied, and which is connected on the output side to a respective additional input of the two multipliers (28, 30).

7. Device according to claim 6, wherein the device (26) for forming an upper and a lower correction factor ($K_o$, $K_u$) has on the input side on the one hand a transformation device (32) and on the other hand an allocation device (34), and on the output side a computing circuit (36), comprising three multipliers (42, 44, 46), a sign changer (48) and a reciprocal former (50), with the measured actual system voltage values ($U_{NR}$, $U_{NS}$, $U_{NT}$) being present at the inputs of the transformation device (32) and the allocation device (34), with the upper and lower output of the allocation device (34) and the magnitude output of the transformation device (32) being respectively connected to an input of a multiplier (44, 46, 42), with the angle output of the transformation device (32) being connected to a control input of the allocation device (34), with the output of the multiplier (42) which is connected downstream of the transformation device (32), at the second input of which multiplier there is a constant (C), being connected by way of the reciprocal former (50) to a respective additional input of the upper and lower multiplier (44, 46) connected downstream of the allocation device (34), and with the output of the upper multiplier (44) of this device (36) being connected to another input of the lower multipliers (30) connected downstream of the partial system former (24), and the output of the lower multiplier (46) of this device (36) being connected by way of the sign changer (48) to a respective input of the upper multipliers (28) connected downstream of the partial system former (24).

8. Device according to claim 6, with a device (52) being provided for the formation of an additional upper and lower correction factor ($K_{\varphi o}$, $K_{\varphi u}$), which has on the input side a computing device (54) and on the output side two multipliers (56, 58), with these multipliers (56, 58) being connected in each case on the input side on the one hand to an output of the computing device (54) and on the other hand to an output of a multiplier (44, 46) of the device (36) for the formation of an upper and lower correction factor ($K_o$, $K_u$), and on the output side to a respective additional input of the lower and upper multipliers (30, 28) connected downstream of the partial system former (24), and with the computing device (54) being connected on the input side to the angle output of the device (26) for the formation of an upper and lower correction factor ($K_o$, $K_u$), and with a predetermined current angle ($\varphi_N^*$) being present at a second input of this computing device (54).

9. Trigger equipment (8) for carrying out the method for generating switching pulses (RO,RM,RU,SO,SM,SU,TO,TM, TU) for a three-phase matrix converter (2) according to claim 4, comprising a partial system former (24), two modulators (14, 16), an auxiliary voltage generator (18), a trigger pulse former (20), a device (26) for forming an upper and lower correction factor ($K_o$, $K_u$), three upper and three lower multipliers (28, 30) and an allocation device (22), with the two modulators (14, 16) being connected on the input side respectively to the auxiliary voltage generator (18) and to the outputs of the upper or lower multipliers (28,30), and on the output side by way of the trigger pulse former (20) to the allocation device (22), with the upper and lower multipliers (28,30) being connected respectively on the input side on the one hand to the upper and lower outputs of the partial system former (24) and on the other hand to an output of the device (26) for the formation of an upper and lower correction factor ($K_o$, $K_u$), with the allocation device (22) being connected to the angle output of the device (12), and with a predetermined desired voltage vector ($\underline{u}^*$) being supplied to the partial system former (24), and determined actual system voltage values ($u_{NR}$, $u_{NS}$, $u_{NT}$) being supplied to the device (26).

10. Trigger equipment (8) according to claim 9, with the auxiliary voltage generator (18) being connected to the angle output of the device (26), with the angle output of the device (26) acting on the frequency of the auxiliary voltage generator (18).

11. Trigger equipment (8) according to claim 9, with a microprocessor being provided in order to implement the component parts (24,14,16,18,20,26,28,30,22) of the trigger equipment.

**Revendications**

1. Procédé pour produire deux signaux de modulation triphasés ($u_{Ro}^*$, $u_{So}^*$, $u_{To}^*$ ; $u_{Ru}^*$, $u_{Su}^*$, $u_{Tu}^*$), en phase et décalés du zéro l'un par rapport à l'autre, pour un dispositif de commande (8) à modulation de largeur d'impulsion d'un convertisseur à matrice (2) à partir d'un vecteur de tension de consigne ($\underline{u}^*$) prédéterminé, des signaux de modulation triphasés existants d'une double modulation étant pondérés au moyen de facteurs de correction supérieur et inférieur ($K_o$, $K_u$), ces facteurs de correction ($K_o$, $K_u$) étant déterminés en fonction d'un angle de tension de réseau ($\gamma_N$) déterminé et de valeurs réelles de tensions de réseau ($U_{NR}$, $U_{NS}$, $U_{NT}$) déterminées.

2. Procédé selon la revendication 1, caractérisé par les étapes suivantes :

   a) transformation des tensions de réseau mesurées ($U_{NR}$, $U_{NS}$, $U_{NT}$) en coordonnées polaires (IUNI, $\gamma_N$) d'un vecteur de tension de réseau ($\underline{u}_N$),
   b) détermination de valeurs de tensions supérieure et inférieure ($U_o$, $U_u$), une valeur d'une tension de réseau mesurée ($U_{NR}$, $U_{NS}$, $U_{NT}$) étant donnée comme valeur de tension supérieure ou inférieure ($U_o$, $U_u$) pour chaque secteur en fonction de l'angle de tension de réseau ($\gamma_N$) déterminé,
   c) formation d'un facteur ($1/U_D$), l'amplitude de tension de réseau déterminée ($IU_NI$) étant multipliée par une constante (C) et la valeur inverse de ce produit étant formée,

d) formation de facteurs de correction supérieur et inférieur ($K_o$, $K_u$), la valeur de tension inférieure ($U_u$) étant multipliée par le facteur formé ($1/U_D$) avec un signe négatif et la valeur de tension supérieure ($U_o$) étant multipliée par le facteur formé ($1/U_D$), et

e) correction des amplitudes de tensions de consigne ($A^*$) des signaux de modulation supérieurs et inférieurs ($U_{Ro}^*$, $U_{So}^*$, $U_{To}^*$ ; $U_{Ru}^*$, $U_{Su}^*$, $U_{Tu}^*$), les amplitudes ($A^*$) des signaux de modulation supérieurs ($u_{Ro}^*$, $u_{So}^*$, $u_{To}^*$) étant multipliées par le facteur de correction supérieur formé ($K_o$) et les amplitudes ($A^*$) des signaux de modulation inférieurs ($u_{Ru}^*$, $u_{Su}^*$, $u_{Tu}^*$) étant multipliées par le facteur de correction inférieur formé ($K_u$).

3. Procédé selon la revendication 1, les facteurs de correction déterminés ($K_o$, $K_u$) étant pondérés avec des facteurs de correction supplémentaires ($K_{\varphi o}$, $K_{\varphi u}$) pour un facteur de puissance de réseau prédéterminé ($\cos\varphi_N^*$), ces facteurs de correction supplémentaires ($K_{\varphi o}$, $K_{\varphi u}$) étant calculés en fonction d'un angle de courant prédéterminé ($\varphi_N^*$) et d'un angle de tension de réseau déterminé ($\gamma_N$).

4. Procédé de commande à modulation de largeur d'impulsion pour produire des impulsions de commutation (RO, RM, RU, SO, SM, SU, TO, TM, TU) pour un convertisseur à matrice (2), des impulsions de modulation binaires supérieures et inférieures (PRO, PSO, PTO ; PRU, PSU, PTU) étant formées en fonction d'un signal d'échantillonnage ($U_{AT}$) et des deux signaux de modulation triphasés ($u_{Ro}^*$, $u_{So}^*$, $u_{To}^*$ ; $u_{Ru}^*$, $u_{Su}^*$, $u_{Tu}^*$) produits selon l'une des revendications précédentes 1 à 3 et étant regroupées par rapport aux phases pour former des impulsions de commutation (RO, RM, RU ; SO, SM, SU ; TO, TM, TU) qui sont associées aux valves (V11,..., V33) du convertisseur à matrice (2) en fonction de l'angle de tension de réseau déterminé ($\gamma_N$).

5. Procédé à modulation de largeur d'impulsion selon la revendication 4, la fréquence du signal d'échantillonnage ($U_{AT}$) étant réglée en fonction de l'angle de tension de réseau déterminé ($\gamma_N$), le type du réglage étant quelconque.

6. Dispositif pour la mise en oeuvre du procédé selon la revendication 1, constitué d'un dispositif de formation de système partiel (24), dont les sorties supérieures et inférieures sont reliées respectivement à des multiplicateurs supérieurs et inférieurs (28, 30) aux sorties desquels les signaux de modulation ($u_{Ro}^*$, $u_{So}^*$, $u_{To}^*$ ; $u_{Ru}^*$, $u_{Su}^*$, $u_{Tu}^*$) sont présents, et d'un dispositif (26) pour la formation de facteurs de correction supérieur et inférieur ($K_o$, $K_u$) qui reçoit en entrée des valeurs réelles de tensions de réseau déterminées ($U_{NR}$, $U_{NS}$, $U_{NT}$) et qui est relié en sortie à chaque fois à une autre entrée des deux multiplicateurs (28, 30).

7. Dispositif selon la revendication 6, le dispositif (26) pour la formation de facteurs de correction supérieur et inférieur ($K_o$, $K_u$) comportant en entrée d'une part un dispositif de transformation (32) et d'autre part un dispositif d'association (34) et en sortie un circuit de calcul (36), constitué de trois multiplicateurs (42, 44, 46), d'un inverseur de signe (48) et d'un calculateur d'inverse (50), les valeurs réelles de tensions de réseau mesurées ($U_{NR}$, $U_{NS}$, $U_{NT}$) étant appliquées aux entrées du dispositif de transformation (32) et du dispositif d'association (34), les sorties supérieure et inférieure du dispositif d'association (34) et la sortie de norme du dispositif de transformation (32) étant reliées chacune à une entrée des multiplicateurs (44, 46, 42), la sortie d'angle du dispositif de transformation (32) étant reliée à une entrée de commande du dispositif d'association (34), la sortie du multiplicateur (42) qui est branché du côté aval du dispositif de transformation (32) et dont la deuxième entrée reçoit une constante (C), étant relié par l'intermédiaire du calculateur d'inverse (50) à chaque fois à une autre entrée des multiplicateurs supérieur et inférieur (44, 46) branchés du côté aval du dispositif d'association (34), la sortie du multiplicateur supérieur (44) de ce dispositif (36) étant reliée à une autre entrée des multiplicateurs inférieurs (30) branchés du côté aval du dispositif de formation de système partiel (24) et la sortie du multiplicateur inférieur (46) de ce dispositif (36) étant reliée par l'intermédiaire de l'inverseur de signe (48) à chaque fois à une entrée des multiplicateurs supérieurs (28) branchés du côté aval du dispositif de formation de système partiel (24).

8. Dispositif selon la revendication 6, un dispositif (52) pour la formation de facteurs de correction supplémentaires supérieur et inférieur ($K_{\varphi o}$, $K_{\varphi u}$) étant prévu, lequel dispositif comporte en entrée un dispositif de calcul (54) et en sortie deux multiplicateurs (56, 58), ces multiplicateurs (56, 58) étant reliés à chaque fois en entrée d'une part à une sortie du dispositif de calcul (54) et d'autre part à une sortie d'un multiplicateur (44, 46) du dispositif (36) pour la formation de facteurs de correction supérieur et inférieur ($K_o$, $K_u$) et en sortie à chaque fois à une autre entrée des multiplicateurs supérieurs et inférieurs (28, 30) branchés du côté aval du dispositif de formation de système partiel (24), le dispositif de calcul (54) étant relié en entrée à la sortie d'angle du dispositif (26) pour la formation de facteurs de correction supérieur et inférieur ($K_o$, $K_u$) et un angle de courant prédéterminé ($\varphi_N^*$) étant présent à une deuxième entrée de ce dispositif de calcul (54).

9. Dispositif de commande (8) pour la mise en oeuvre du procédé pour la production d'impulsions de commutation (RO, RM, RU, SO, SM, SU, TO, TM, TU) pour un convertisseur à matrice (2) triphasé selon la revendication 4, constitué d'un dispositif de formation de système partiel (24), de deux modulateurs (14, 16), d'un générateur de tension auxiliaire (18), d'un dispositif de formation d'impulsions d'allumage (20), d'un dispositif (26) pour la formation de facteurs de correction supérieur et inférieur ($K_o$, $K_u$), de trois multiplicateurs supérieurs (28) et de trois multiplicateurs inférieurs (30) et d'un dispositif d'association (22), les deux modulateurs (14, 16) étant reliés en entrée à chaque fois au générateur de tension auxiliaire (18) et aux sorties des multiplicateurs supérieurs ou inférieurs (28, 30) et en sortie par l'intermédiaire du dispositif de formation d'impulsions d'allumage (20) au dispositif d'association (22), les multiplicateurs supérieurs et inférieurs (28, 30) étant reliés à chaque fois en entrée d'une part aux sorties supérieures et inférieures du dispositif de formation de système partiel (24) et d'autre part à une sortie du dispositif (26) pour la formation de facteurs de correction supérieur et inférieur ($K_o$, $K_u$), le dispositif d'association (22) étant relié à la sortie d'angle du dispositif (12) et un vecteur de tension de consigne prédéterminé ($u^*$) et les valeurs réelles de tensions de réseau déterminées ($U_{NR}$, $U_{NS}$, $U_{NT}$) étant envoyés au dispositif de formation de système partiel (24).

10. Dispositif de commande (8) selon la revendication 9, le générateur de tension auxiliaire (18) étant relié à la sortie d'angle du dispositif (26) et la sortie d'angle du dispositif (26) agissant sur la fréquence du générateur de tension auxiliaire (18).

11. Dispositif de commande (8) selon la revendication 9, un microprocesseur étant prévu pour la mise en oeuvre de ses composants (24, 14, 16, 18, 20, 26, 28, 30, 22).

$$U_{do} = u_{NR} - u_{NS}$$
$$U_{du} = u_{NS} - u_{NT}$$

FIG 1

a) $Y_N$ ca 15 Grad    b) $Y_N$ = 30 Grad

FIG 2

FIG 3

FIG 4

EP 0 726 641 B1

$\underline{U}^*$

| 2 / 3 |

Super-sinus

Max Min

24

28 ×

30 ×

0,5

+

−

Begrenzung
"oben": +1
"unten": −1
Nullsystem-korrekt

$\underline{u}^*_{oben}$

$\underline{u}^*_{unten}$

$u_{NR}$
$u_{NS}$
$u_{NT}$

34

$U_u$
$U_o$

$\gamma_N$

46 ×

$K'_u$  $K'_o$

48 | −1 |

$K_o$

58 ×

26

$u_{NR}$
$u_{NS}$
$u_{NT}$

38 | 3 / 2 |

32

40 | K / P |

$|\underline{u}_N|$

$\dfrac{\sqrt{3}}{2} = C$

42 ×  y

50 | 1/y |

36 ×  44

$1/U_D$

$K_u$

56 ×  52

$K_{\varphi o}$

$K_{\varphi u}$

54

$\varphi^*_N$

$\gamma_N$

FIG 5

12

FIG 6

EP 0 726 641 B1

FIG 7

FIG 8

FIG 9

FIG 10

FIG 11